# FASCICULE DE BREVET EUROPEEN

(11) **EP 3 090 927 B1**
(45) Date de publication et mention de la délivrance du brevet: **12.12.2018**
(21) Numéro de dépôt: 16168404.8
(22) Date de dépôt: 04.05.2016
(51) Int. Cl.: B62D 33/027, B60P 1/26, B60J 5/06

(54) **STRUCTURE DE TRANSPORT MUNIE D'UNE PORTE A COULISSEMENT VERTICAL**
TRANSPORTSTRUKTUR, DIE MIT EINER VERTIKALEN SCHIEBETÜR AUSGESTATTET IST
TRANSPORT STRUCTURE PROVIDED WITH A VERTICALLY SLIDING DOOR

(30) Priorité: 07.05.2015 FR 1554151
(43) Date de publication de la demande: 09.11.2016
(73) Titulaire: Romano, Paulo, 26760 Beaumont les Valence (FR)
(72) Inventeur: Romano, Paulo, 26760 Beaumont les Valence (FR)
(74) Mandataire: Lavialle, Bruno François Stéphane

(56) Documents cités:
- AT-B- 360 349
- DE-U1-202013 007 557
- GB-A- 950 166
- GB-A- 2 409 232
- US-A1- 2007 237 617

## Description

L'invention est relative au transport de marchandises telles que des matériaux de construction en palettes ou en vrac. L'invention a plus particulièrement pour objet une structure de transport munie d'une porte capable de coulisser verticalement.

### ARRIERE PLAN DE L'INVENTION

On connaît nombre de structures de transport adaptées à la réception de marchandises, par exemple en vrac ou en palettes. Ces structures peuvent être sous la forme de plateau ou plateforme, de bennes, amovibles ou non, de remorques, etc. De telles structures sont généralement transportées à l'arrière d'un camion et pourvues de portes ou de ridelles amovibles pour faciliter et accélérer les déchargements.

Ces portes comportent généralement un ou plusieurs vantaux pivotants, lesquels s'ouvrent manuellement avant un déchargement. Une telle ouverture comporte des désavantages et même des risques en ce que l'ouverture d'une porte à vantaux peut se révéler violente et incontrôlée du fait de la poussée exercée sur la porte, par les marchandises transportées. La hauteur à laquelle se trouve une telle porte peut également se révéler problématique, la hauteur du camion et de la structure de transport étant généralement trop importante pour un utilisateur.

Des problèmes se posent également avec les ridelles dont la manipulation par l'utilisateur peut se révéler problématique notamment du fait du poids des ridelles ou de la hauteur à laquelle elles se trouvent par rapport au sol.

Il est connu du document GB-A-950166 une structure de transport selon le préambule de la revendication 1.

### OBJET DE L'INVENTION

L'invention a pour but de faciliter l'accès au contenu des structures de transport telles que les parties arrière de camions, les bennes et les remorques.

### RESUME DE L'INVENTION

A cet effet, on propose une structure de transport de marchandises, comportant au moins une armature pourvue de parois et d'au moins une porte définissant une enceinte de réception des marchandises, et ladite porte étant reliée à l'armature par des moyens de liaison autorisant un mouvement de la porte entre des positions ouverte et fermée.

Selon l'invention, les moyens de liaison sont agencés pour que la porte coulisse verticalement entre une position haute correspondant à la position fermée et une position basse correspondant à la position ouverte.

Selon l'invention, l'ouverture s'étend depuis un plancher de la structure de transport et ladite porte dégage complètement l'ouverture lorsqu'elle est en position ouverte. De préférence, la porte en position ouverte a son bord supérieur au voisinage d'un plancher de la structure de transport.

On comprend qu'ainsi, la porte descend en position fermée jusqu'à dégager complètement l'ouverture pour faciliter le déchargement des marchandises reposant sur le plancher de la structure de transport.

Avantageusement encore, ladite porte est d'un seul bloc.

Également selon l'invention, les moyens de liaison comportent au moins deux poutres entre lesquelles la porte se déplace sous l'action d'au moins un vérin, en suivant une trajectoire définie par au moins un rail de guidage s'étendant le long d'une des poutres.

Préférentiellement toujours, le vérin est lié à rotation, d'une part, avec une des poutres via un premier axe horizontal et, d'autre part, avec la porte via un second axe horizontal, lesdites rotations autorisant un débattement angulaire de la porte et du vérin lorsque la porte passe de sa position haute à sa position basse et inversement.

De préférence, le vérin est lié à rotation via le premier axe horizontal à une extrémité supérieure de ladite poutre et via le second axe horizontal à un bord latéral de la porte.

De préférence toujours, le vérin est un vérin simple effet dont le sens de travail correspond au sens d'ouverture de la porte.

En addition, la porte comporte au moins un anneau coopérant avec au moins un crochet disposé à proximité d'un bord du fond de l'armature et agencé pour empêcher un pivotement de la porte lorsque cette dernière se trouve en position haute.

Avantageusement, chacune des poutres de part et d'autre de la porte comprend une tôle pliée ayant une section en forme de U adaptée pour le passage d'un vérin et comportant une rainure formant le rail de guidage.

Dans un mode de réalisation préféré, la structure de transport est solidaire de la partie arrière d'un châssis de camion.

En variante, la structure de transport est montée mobile sur la partie arrière du châssis de camion.

En variante toujours, la structure de transport constitue la remorque d'un camion.

En variante encore, la structure de transport constitue une benne, amovible ou non.

### BREVE DESCRIPTION DES FIGURES

L'invention sera mieux comprise à la lecture de la description qui suit d'un mode particulier de réalisation non limitatif de l'invention.

Il sera fait référence aux dessins annexés parmi lesquels :
- la figure 1 est une vue générale en perspective d'un mode de réalisation préféré d'une structure de transport selon l'invention dans lequel ladite structure est montée solidaire de la partie arrière d'un châssis de camion ;
- la figure 2a est une vue partielle en perspective de la structure de transport selon l'invention avec sa porte en position fermée ;
- la figure 2b est une vue partielle en perspective de la structure de transport selon l'invention avec sa porte en position ouverte ;
- la figure 3 est une vue en perspective d'une variante de la structure de transport selon l'invention dans laquelle ladite structure forme une benne amovible.

### DESCRIPTION DETAILLEE DE L'INVENTION

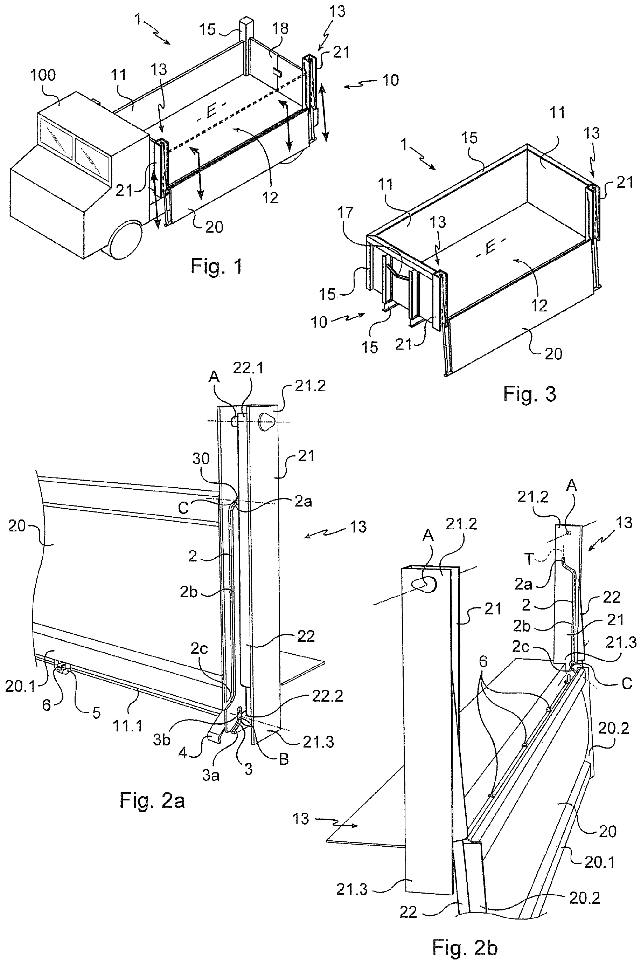

En référence à la figure 1, la structure de transport 1 selon un mode de réalisation préféré de l'invention est montée solidaire de la partie arrière d'un châssis de camion 100. Ladite structure 1 comporte une armature 10 comprenant de manière générale des parois 11 et une porte arrière à vantaux pivotants 18 montée entre des renforts 15 pour définir une enceinte E ayant une ouverture latérale 12 fermée par une porte 20. L'enceinte E est dédiée au transport de marchandises. La porte 20 et la paroi 11 en regard sont ici sensiblement de mêmes dimensions et forment des ridelles. L'ouverture latérale 12 de l'enceinte E s'étend ici depuis un plancher de la structure 1 sensiblement sur toute la longueur de celle-ci et est disposée pour permettre le déchargement des marchandises contenues dans la structure de transport 1. Ladite porte 20 est montée sur l'armature 10 pour coulisser verticalement entre une position haute correspondant à une position fermée de la porte 20 et une position basse correspondant à une position ouverte de la porte 20. La porte 20 en position ouverte a son bord supérieur au voisinage d'un plancher de la structure de transport et dégage complètement l'ouverture latérale 12 lorsqu'elle est en position ouverte.

La porte 20 est de construction monobloc pour plus de simplicité et de robustesse.

La liaison de la porte 20 à l'armature 10, et de fait les mouvements d'ouverture et de fermeture de ladite porte, sont ici assurés par des moyens de liaison 13.

Plus particulièrement visibles en figures 2a et 2b, les moyens de liaison 13 comportent deux poutres verticales 21 disposées de part et d'autre de la porte 20. Lesdites poutres verticales 21 sont ici des tôles pliées avec une section en forme de U, et sont rapportées sur l'armature 10, par exemple par soudage. Les poutres verticales 21 sont ici agencées pour former des renforts verticaux pour ladite armature.

Chaque poutre verticale 21 porte un rail de guidage 2 définissant une trajectoire T. Le rail de guidage 2 est ici une rainure découpée dans la portion de tôle de la poutre 21 qui fait face à un bord vertical 20.2 de la porte 20. Le rail de guidage 2 comporte une première terminaison 2a borgne au niveau d'une extrémité supérieure 21.2 de la poutre verticale 21, une zone centrale de coulissement 2b s'étendant relativement verticalement le long de la poutre et une seconde terminaison 2c débouchant au niveau d'une extrémité inférieure 21.3.

Une portion supérieure dudit bord vertical de chaque bord vertical 20.2 de la porte 20 comporte un axe de coulissement C qui s'étend relativement perpendiculairement au bord vertical 20.2 et qui est agencé pour coopérer avec le rail de guidage 2 de la poutre verticale 21, et ainsi suivre la trajectoire T. On notera que le montage de l'axe C dans le rail de guidage 2 autorise une certaine rotation de la porte autour de l'axe C.

La trajectoire T définissant en grande partie les mouvements de la porte 20 lorsque cette dernière coulisse entre ses positions haute et basse, on détermine ladite trajectoire T en fonction du mouvement d'ouverture que l'on souhaite obtenir.

Bien sûr, pour que le dispositif d'ouverture fonctionne correctement, les deux axes de coulissement C doivent être montés sur la porte 20 de manière à être coaxiaux l'un par rapport à l'autre. Ici, les axes de coulissement C sont munis de galets 30 agencés pour rouler dans les rails de guidage 2.

Pour réaliser son coulissement, la porte 20 est entrainée par deux vérins 22 montés chacun entre un des bords verticaux 20.2 de la porte 20 et la poutre verticale 21 adjacente. Chaque vérin 22 est ici un vérin hydraulique double effet connu en soi.

Les liaisons desdits vérins 22 avec les poutres verticales 21 et la porte 20 sont détaillées ci-après.

Un premier axe horizontal A est fixé à une extrémité supérieure 21.2 de chaque poutre verticale 21, chaque extrémité dudit axe A étant montée entre, et solidaire, des portions de tôle en regard l'une par rapport à l'autre de la poutre verticale 21. On notera que les deux premiers axes horizontaux A sont de fait montés relativement parallèlement aux deux axes de coulissement C. Bien sûr, pour que le dispositif d'ouverture fonctionne correctement, les deux premiers axes horizontaux A doivent être montés sur leur poutre verticale respective relativement coaxiaux l'un par rapport à l'autre.

Une attache supérieure 22.1 appartenant au corps du vérin 22 coopère avec l'axe A de sorte à ce que ledit vérin 22 puisse pivoter autour dudit premier axe horizontal A de la poutre verticale 21 associée. On notera qu'avantageusement l'espace créé par la forme en U d'une poutre verticale 21 est agencé pour accueillir au moins partiellement le vérin 22 lorsque ce dernier est au repos vers le bas, comme sur la figure 2a.

Une portion inférieure de chaque bord vertical 20.2 de la porte 20 comporte un second axe horizontal B agencé pour coopérer avec une attache inférieure 22.2 appartenant à la tige du vérin 22, de sorte à ce que ledit vérin 22 puisse pivoter autour dudit second axe horizontal B. On notera que les deux seconds axes horizontaux B sont de fait montés relativement parallèlement aux deux premiers axes horizontaux A et donc parallèlement également aux deux axes de coulissement C. Bien sûr, pour que le dispositif d'ouverture fonctionne correctement, les deux seconds axes horizontaux B doivent être montés sur la porte 20 coaxiaux l'un par rapport à l'autre.

Pour résumer, la porte 20, par le biais de ses deux axes de coulissement C, coulisse selon la trajectoire T dans les rails de guidage 2 des poutres verticales 21, ladite porte 20 étant entrainée, par le biais de ses deux axes horizontaux B, par la force exercée par les vérins 22.

Comme la porte 20 est liée à rotation sur ses portions supérieure et inférieure par le biais des axes C et B, et comme les vérins 22 sont eux-aussi liés à rotation par le biais de leurs attaches supérieures 22.1 et inférieures 22.2, l'ensemble des liaisons mécaniques relatives à ladite porte 20 et aux vérins 22 comporte de fait une liberté de mouvement radial autorisant un débattement angulaire de la porte et des vérins 22 lorsque ladite porte 20 passe de sa position haute à sa position basse et inversement.

Bien sûr, afin d'éviter que la porte 20 et notamment les axes de coulissement C et leurs galets ne sortent des rails de guidage 2 par les secondes terminaisons 2c, il faut veiller à ce que la course des vérins 22 soit inférieure à la course de l'axe de coulissement C dans le rail de guidage 2. Là encore, la détermination des distances et des directions de la trajectoire T est importante.

Afin d'arrêter la remontée de la porte 20 lorsque cette dernière passe de sa position basse à sa position haute, et ainsi déterminer une butée de fin de course de ladite position haute, on ajoute une zone d'arrêt 3 sous la forme d'une rainure découpée dans la tôle de l'extrémité inférieure 21.3 de chaque poutre 21. Ladite zone d'arrêt 3 comporte un tronçon d'entrée 3a incliné et relativement parallèle à la seconde terminaison 2c du rail de guidage 2, et un tronçon d'arrêt 3b borgne et relativement vertical, les tronçons 3a et 3b étant agencés pour accueillir et arrêter le second axe horizontal B, et éventuellement l'attache inférieure 22.2 du vérin 22, lorsque la porte 20 est presque en position haute ou totalement en position haute et donc lorsque ledit vérin 22 est presque rétracté ou totalement rétracté.

Avantageusement alors, on ajoute une lamelle de guidage 4 au niveau de chaque extrémité inférieure 21.3 des poutres verticales 21, ici une languette en tôle pliée agencée pour guider les seconds axes horizontaux B dans les zones d'arrêt 3 lorsque la porte 20 passe de sa position basse à sa position haute. De préférence, le ou les pliages présents sur les languettes en tôle ont un rayon de courbure suffisamment élevé pour guider en souplesse les seconds axes horizontaux B dans les zones d'arrêt 3.

De la même manière, si les rails de guidage 2 et/ou les zones d'arrêt 3, qui sont ici des rainures découpées dans de la tôle, sont pourvus d'angles, il ne fait aucun doute, et ce pour les mêmes raisons que celles évoquées précédemment, que les rayons de courbure doivent être suffisamment élevés pour guider les axes concernés en limitant le risque de coincement.

Afin d'empêcher un pivotement de la porte 20 lorsqu'elle se trouve en position haute, et notamment un pivotement de son bord inférieur 20.1, dû à une éventuelle poussée des marchandises contenues dans l'enceinte E, ladite porte peut comporter en outre un ou plusieurs anneaux 5 disposés près du bord inférieur 20.1 et agencés pour coopérer avec des crochets 6 disposés à proximité d'un bord 11.1 du fond de l'armature 10 relativement adjacent au bord inférieur 20.1 de la porte 20 lorsque cette dernière est en position haute.

Une première variante (non-représentée) prévoit que la structure de transport 1, montée sur la partie arrière d'un châssis de camion 100, est mobile par rapport à ladite partie arrière du châssis et peut basculer sur les côtés et/ou en arrière grâce à des moyens de basculement (non-représentés) sous la forme d'au moins un ou plusieurs vérins ayant une première extrémité liée au châssis et une seconde extrémité liée à la structure de transport.

Une seconde variante prévoit que la structure de transport 1 constitue une remorque de camion connue en soi. Une telle structure de transport formant remorque porte des roues et est liée à rotation selon un axe sensiblement vertical avec la partie arrière du châssis du camion.

Une troisième variante, visible en figure 3, prévoit que la structure de transport 1 forme une benne amovible, connue en soi, manipulable par un bras hydraulique (non-représenté) via un axe de préhension 17 et adaptée pour être transportée à l'arrière d'un camion (non-représenté).

L'invention n'est pas limitée à ce qui vient d'être décrit, mais englobe au contraire toute variante entrant dans le cadre défini par les revendications.

En particulier, il ne fait aucun doute que l'invention s'applique à tous les types de structures de transport et que la forme, la taille et le poids peuvent varier en fonction de leur utilisation et notamment des matériaux contenus.

On prendra aussi pour acquis qu'une structure de transport selon l'invention peut disposer de plusieurs portes.

La porte peut se trouver sur un côté de la structure de transport ou à l'arrière de celle-ci.

Les types de vérins décrits et leurs dispositions peuvent aussi varier. Par exemple, le sens des vérins peut être inversé et il est possible d'utiliser des vérins simple effet.

Pour ce qui est des rails de guidage, il ne fait aucun doute que ces derniers peuvent être des barres rapportées sur les portions des poutres verticales en regard avec les bords verticaux de la porte. Lesdites barres rapportées seraient alors agencées pour coopérer avec des roues ou des galets montés sur la porte. Une disposition inverse, où le rail de guidage serait monté sur la porte et les roues ou les galets sur les poutres verticales est aussi possible.

Dans le cas où la structure de transport selon l'invention serait pourvue d'une ouverture supérieure, il serait bien sûr possible de lui additionner un couvercle amovible ou non pour fermer ladite ouverture supérieure.

## Revendications

1. Structure de transport (1) de marchandises, comportant au moins une armature (10) pourvue de parois (11), d'un plancher et d'au moins une porte (20) définissant une enceinte (E) de réception des marchandises, et ladite porte (20) étant reliée à l'armature (10) par des moyens de liaison (13) autorisant un mouvement de coulissement de la porte (20) entre une position basse correspondant à une position ouverte dégageant totalement une ouverture d'accès s'étendant depuis le plancher de la structure et une position haute correspondant à une position fermée obturant l'ouverture, **caractérisée en ce que** les moyens de liaison (13) comportent au moins deux poutres verticales (21) entre lesquelles la porte (20) se déplace sous l'action d'au moins un vérin (22), en suivant une trajectoire (T) définie par au moins un rail de guidage (2) s'étendant le long d'une poutre verticale (21).

2. Structure de transport selon la revendication 1, dans laquelle le vérin (22) est lié à rotation d'une part avec une poutre verticale (21) via un premier axe horizontal (A), et d'autre part avec la porte (20) via un second axe horizontal (B), lesdites rotations autorisant un débattement angulaire de la porte (20) et du vérin (22) lorsque la porte (20) passe de sa position haute à sa position basse et inversement.

3. Structure de transport selon la revendication 2, dans laquelle le vérin (22) est lié à rotation via le premier axe horizontal (A) à une extrémité supérieure (21.2) d'une poutre verticale (21), et via le second axe horizontal (B) à un bord vertical (20.2) de la porte (20).

4. Structure de transport selon l'une quelconque des revendications 1 à 3, dans laquelle le vérin (22) est un vérin simple effet dont le sens de travail correspond au sens d'ouverture de la porte (20).

5. Structure de transport selon l'une quelconque des revendications 1 à 4, dans laquelle la porte (20) comporte au moins un anneau (5) coopérant avec au moins un crochet (6) disposé à proximité d'un bord (11.1) du fond de l'armature (10) et agencé pour empêcher un pivotement de la porte (20), et notamment un pivotement de son bord inférieur (20.1), lorsque ladite porte se trouve en position haute.

6. Structure de transport selon l'une quelconque des revendications 1 à 5, dans laquelle une poutre verticale (21) est une tôle pliée avec une section en forme de U adaptée pour le passage d'un vérin (22).

7. Structure de transport selon l'une quelconque des revendications 1 à 6, dans laquelle une poutre verticale (21) est une tôle pliée comportant une rainure découpée dans ladite tôle pour former le rail de guidage (2) .

8. Structure de transport selon l'une quelconque des revendications précédentes, ladite structure (1) étant montée solidaire de la partie arrière d'un châssis de camion (100).

9. Structure de transport selon l'une quelconque des revendications 1 à 7, ladite structure (1) étant montée mobile sur la partie arrière d'un châssis de camion (100) .

10. Structure de transport selon l'une quelconque des revendications 1 à 7, ladite structure (1) constituant la remorque d'un camion (100).

11. Structure de transport selon l'une quelconque des revendications 1 à 7, ladite structure (1) constituant une benne.

12. Structure de transport selon la revendication 11, ladite structure (1) constituant une benne amovible adaptée pour être manipulée par un bras hydraulique et disposée sur la partie arrière d'un châssis de camion (100).

## Patentansprüche

1. Transportstruktur (1) für den Transport von Waren, umfassend mindestens ein Gestell (10), das mit Wänden (11), einem Boden und mindestens einer Tür (20) versehen ist, die eine Einfassung (E) zur Aufnahme von Waren definieren, und wobei die genannte Tür (20) mit dem Gestell (10) über Verbindungsmittel (13) verbunden ist, die eine Schiebebewegung der Tür (20) zwischen einer unteren Position, die einer geöffneten Position entspricht, die eine sich ab dem Boden der Struktur erstreckende Zugangsöffnung vollständig freigibt, und einer oberen Position gestattet, die einer geschlossenen Position entspricht, die die Öffnung verschließt, **dadurch gekennzeichnet, dass** die Verbindungsmittel (13) mindestens zwei vertikale Träger (21) umfassen, zwischen denen sich die Tür (20) unter der Wirkung mindestens eines Zylinders (22) verschiebt, indem sie einer Bahn (T) folgt, die von mindestens einer sich entlang eines vertikalen Trägers (21) erstreckenden Führungsschiene (2) definiert ist.

2. Transportstruktur nach Anspruch 1, bei der der Zylinder (22) einerseits über eine erste horizontale Achse (A) mit einem vertikalen Träger (21) und andererseits über eine zweite horizontale Achse (B) mit der Tür (20) drehfest verbunden ist, wobei die Drehungen eine Winkelbewegung der Tür (20) und des Zylinders (22) gestatten, wenn die Tür (20) von ihrer oberen Position in ihre untere Position übergeht und umgekehrt.

3. Transportstruktur nach Anspruch 2, bei der der Zylinder (22) drehfest über die erste horizontale Achse (A) mit einem oberen Ende (21.2) eines vertikalen Trägers (21) und über die zweite horizontale Achse (B) mit einem vertikalen Rand (20.2) der Tür (20) verbunden ist.

4. Transportstruktur nach einem der Ansprüche 1 bis 3, bei der der Zylinder (22) ein einfachwirkender Zylinder ist, dessen Arbeitsrichtung der Öffnungsrichtung der Tür (20) entspricht.

5. Transportstruktur nach einem der Ansprüche 1 bis 4, bei der die Tür (20) mindestens einen Ring (5) umfasst, der mit mindestens einem Haken (6) zusammenarbeitet, der nahe einem Rand (11.1) des Bodens des Gestells (10) angeordnet und ausgebildet ist, um ein Verschwenken der Tür (20) zu verhindern, und insbesondere ein Verschwenken ihres unteren Randes (20.1), wenn sich die genannte Tür in der oberen Position befindet.

6. Transportstruktur nach einem der Ansprüche 1 bis 5, bei der ein vertikaler Träger (21) ein gebogenes Blech mit einem U-förmigen Querschnitt ist, der an den Durchtritt eines Zylinders (22) angepasst ist.

7. Transportstruktur nach einem der Ansprüche 1 bis 6, bei der ein vertikaler Träger (21) ein gebogenes Blech ist, das eine Nut umfasst, die aus dem genannten Blech ausgeschnitten ist, um die Führungsschiene (2) zu bilden.

8. Transportstruktur nach einem der vorhergehenden Ansprüche, wobei die Struktur (1) fest mit dem hinteren Teil eines Lastkraftwagenfahrgestells (100) verbunden ist.

9. Transportstruktur nach einem der Ansprüche 1 bis 7, wobei die genannte Struktur (1) beweglich an dem hinteren Teil eines Lastkraftwagenfahrgestells (100) gelagert ist.

10. Transportstruktur nach einem der Ansprüche 1 bis 7, wobei die genannte Struktur (1) den Anhänger eines Lastkraftwagens (100) bildet.

11. Transportstruktur nach einem der Ansprüche 1 bis 7, wobei die genannte Struktur ein Fördergefäß bildet.

12. Transportstruktur nach Anspruch 11, wobei die genannte Struktur (1) ein abnehmbares Fördergefäß bildet, das angepasst ist, um von einem Hydraulikarm bewegt zu werden, und auf dem hinteren Teil eines Lastkraftwagenfahrgestells (100) angeordnet ist.

## Claims

1. Structure (1) for transporting goods, comprising at least one frame (10) provided with walls (11), with a floor and with at least one door (20) which define an enclosure (E) for receiving goods, and said door (20) being connected to the frame (10) by connecting means (13) which allow a sliding movement by the door (20) between a low position constituting an open position in which an access opening extending from the floor of the structure is totally clear and a high position constituting a closed position in which the opening is blocked off, **characterised in that** the connecting means (13) comprise at least two vertical beams (21) between which the door (20) moves under the action of at least one ram (22) by following a trajectory (T) which is defined by at least one guiding rail (2) which extends along a vertical beam (21).

2. Transporting structure according to claim 1, wherein the ram (22) is linked for movements in rotation on the one hand to a vertical beam (21) via a first horizontal shaft (A), and on the other hand to the door (20) via a second horizontal shaft (B), said movements in rotation allowing an angular travel of the door (20) and the ram (22) when the door (20) changes from its high position to its low position and vice versa.

3. Transporting structure according to claim 2, wherein the ram (22) is linked for movements in rotation via the first horizontal shaft (A) to an upper end (21.2) of a vertical beam (21), and via the second horizontal shaft (B) to a vertical edge (20.2) of the door (20).

4. Transporting structure according to any one of claims 1 to 3, wherein the ram (22) is a single-acting ram whose working direction corresponds to the direction in which the door (20) opens.

5. Transporting structure according to any one of claims 1 to 4, wherein the door (20) comprises at least one ring (5) which co-operates with at least one hook (6) which is arranged close to an edge (11.1) of the floor of the frame (10) and which is adapted to prevent pivoting of the door (20), and in particular pivoting of its bottom edge (20.1), when said door is in its high position.

6. Transporting structure according to any one of claims 1 to 5, wherein a vertical beam (21) is a folded metal plate of U-shaped cross-section which is adapted to take a ram (22).

7. Transporting structure according to any one of claims 1 to 6, wherein a vertical beam (21) is a folded metal plate comprising a groove which is cut in said metal plate to form the guiding rail (2).

8. Transporting structure according to any one of the preceding claims, said structure (1) being mounted to be secured to the rear portion of a chassis of a lorry (100) .

9. Transporting structure according to any one of claims 1 to 7, said structure (1) being mounted to be movable on the rear portion of a chassis of a lorry (100).

10. Transporting structure according to any one of claims 1 to 7, said structure (1) forming the trailer of a lorry (100).

11. Transporting structure according to any one of claims 1 to 7, said structure (1) forming a skip.

12. Transporting structure according to claim 11, said structure (1) forming a detachable skip which is adapted to be handled by a hydraulic arm and which is arranged on the rear portion of a chassis of a lorry (100).
